# EUROPEAN PATENT APPLICATION

(11) **EP 4 503 452 A1**
(43) Date of publication of application: **05.02.2025**
(21) Application number: 24191334.2
(22) Date of filing: 29.07.2024
(51) Int. Cl.: H04B 1/10, H04B 15/02, H04B 17/20, H04W 74/0808, H04W 72/54

(54) **RADIO STATION AND CARRIER SENSING METHOD**

(30) Priority: 31.07.2023 JP 2023124906
(71) Applicant: Icom Incorporated, Osaka 547-0004 (JP)
(72) Inventor: KITABATA, Masanori, Osaka, 547-0004 (JP); MATSUDA, Satoshi, Osaka, 547-0004 (JP)
(74) Representative: v. Bezold & Partner Patentanwälte - PartG mbB

(57) **Abstract**

A frequency selector (20) included in a radio station (1) selects a target frequency for carrier sensing from within a bandwidth of one of a plurality of subcarriers for a channel specified for wireless communication in accordance with Orthogonal Frequency Division Multiplexing, at least a portion of the bandwidth of the one of the subcarriers being within a transmission band. A detector (16) detects a signal level, at the target frequency, of a real signal obtained as a result of digitally converting an electric signal derived from a radio wave captured by an antenna (10). A determiner (17) determines whether the transmission band is used for the wireless communication from the signal level.

## Description

This application relates generally to a radio station and a carrier sensing method.

Wireless communication equipment that connects to a wireless local area network (WLAN) performs wireless communication in a 2.4 GHz band or a 5 GHz band that is allocated for WLAN communication in accordance with Orthogonal Frequency Division Multiplexing (OFDM). Wireless communication equipment detects an available channel in order to avoid interference with wireless communication performed by another wireless communication equipment. An example of wireless communication equipment of this type is disclosed in Unexamined Japanese Patent Application Publication No.2005-101787.

A receiving device disclosed in Unexamined Japanese Patent Application Publication No.2005-101787 estimates whether a channel is in use or not from a reception level of a subcarrier contained in a received channel signal.

A radio station according to a first aspect of the present disclosure includes:
a frequency selector to select, when at least a portion of a transmission band containing a designated transmission frequency overlaps with at least a portion of a bandwidth of at least one of a plurality of channels specified for wireless communication in accordance with Orthogonal Frequency Division Multiplexing, a target frequency for carrier sensing from within a bandwidth of one of a plurality of subcarriers for the at least one of the channels, the bandwidth of the one of the subcarriers having at least a portion being within the transmission band;
a detector to detect a signal level, at the target frequency, of a real signal obtained as a result of digitally converting an electric signal derived from a radio wave captured by an antenna; and
a determiner to determine whether the transmission band is used for the wireless communication from the signal level detected by the detector.

Preferably, the frequency selector selects, when a center frequency of one of the subcarriers of which a bandwidth has at least a portion being within the transmission band is within the transmission band, the target frequency based on the center frequency.

Preferably, the frequency selector selects, when center frequencies of the subcarriers are within the transmission band, one of the center frequencies that is closest to the transmission frequency as the target frequency.

Preferably, the frequency selector selects, when center frequencies of the subcarriers are within the transmission band, one of the center frequencies that is closest to a center of a bandwidth of one of the channels containing the subcarriers as the target frequency.

Preferably, the frequency selector selects, when a center frequency of each of the at least one of the subcarriers of which a bandwidth has at least a portion being within the transmission band, is outside the transmission band, an upper limit or a lower limit of the transmission band overlapping with the at least one of the subcarriers as the target frequency.

Preferably, the frequency selector selects, when at least a portion of the transmission band overlaps with at least a portion of a bandwidth of each of the channels that is within the transmission band, the target frequency for each of the channels from within a bandwidth of one of the subcarriers for the channels that is within the transmission band.

Preferably, the radio station further includes:
a reception processing circuit to digitally convert the electric signal, down-convert the resultant signal, and generate an IF signal in an intermediate frequency band;
a first variable-frequency oscillator to output a first reference signal;
a second variable-frequency oscillator to output a second reference signal;
an extractor to perform complex frequency conversion on the IF signal using the first reference signal and band-limit the resultant signal within a specified bandwidth centered at a frequency of the first reference signal to generate a first complex signal; and
a frequency controller to adjust the frequency of the first reference signal according to the transmission frequency and adjust a frequency of the second reference signal according to difference between the transmission frequency and the target frequency, wherein
the detector detects the signal level of the real signal obtained as a result of complex frequency conversion on the first complex signal using the second reference signal.

Preferably, the radio station further includes:
a reception processing circuit to digitally convert the electric signal, down-convert the resultant signal, and generate an IF signal in an intermediate frequency band;
a first variable-frequency oscillator to output a first reference signal;
a plurality of second variable-frequency oscillators to respectively output second reference signals each having a different frequency;
an extractor to perform complex frequency conversion on the IF signal using the first reference signal and band-limit the resultant signal within a specified bandwidth centered at a frequency of the first reference signal to generate a first complex signal; and
a frequency controller to adjust the frequency of the first reference signal according to the transmission frequency and adjust frequencies of the second reference signals according to difference between the transmission frequency and the target frequency, wherein
the radio station comprises a plurality of the detectors each associated with a corresponding one of the second variable-frequency oscillators,
the detectors each detect the signal level of the real signal obtained as a result of complex frequency conversion on the first complex signal using the second reference signal output from the second variable-frequency oscillator associated with the detector,
the frequency controller adjusts the frequency of the second reference signal output from each of the second variable-frequency oscillators according to the difference between the transmission frequency and the target frequency selected by the frequency selector for each of the channels, and
the determiner determines whether the transmission band is used for the wireless communication from the signal level detected by each of the detectors.

Preferably, the frequency selector selects the transmission frequency and a frequency within a bandwidth of one of the subcarriers for the channels having at least a portion being within the transmission band, as the target frequencies.

Preferably, the radio station further includes an operation device to accept designation of the transmission frequency as well as an instruction to perform transmission in one of a narrowband mode and a wideband mode in which the transmission band is wider than in the narrowband mode, wherein
when transmission in the wideband mode is designated at the operation device, the frequency selector selects, when at least a portion of the transmission band containing the transmission frequency designated at the operation device overlaps with at least a portion of the bandwidth of the at least one of the channels, the target frequency from within a bandwidth of one of the subcarriers for the at least one of the channels having at least a portion being within the transmission band, and when transmission in the narrowband mode is designated at the operation device, the frequency selector selects, the transmission frequency designated at the operation device as the target frequency.

Preferably, the frequency selector selects, when at least a portion of the transmission band overlaps with at least a portion of a bandwidth of at least one of a plurality of channels specified for WLAN communication in accordance with Orthogonal Frequency Division Multiplexing, a target frequency for carrier sensing from within a bandwidth of one of the subcarriers for the at least one of the channels having at least a portion being within the transmission band.

A carrier sensing method according to a second aspect of the present disclosure is a carrier sensing method performed by a radio station and includes:
selecting, when at least a portion of a transmission band containing a designated transmission frequency overlaps with at least a portion of a bandwidth of at least one of a plurality of channels specified for wireless communication in accordance with Orthogonal Frequency Division Multiplexing, a target frequency for carrier sensing from within a bandwidth of one of a plurality of subcarriers for the at least one of the channels, the bandwidth of the one of the subcarriers having at least a portion being within the transmission band;
detecting a signal level, at the target frequency, of a real signal obtained as a result of digitally converting an electric signal derived from a radio wave captured by an antenna; and
determining whether the transmission band is used for the wireless communication from the signal level.

The radio station according to the present disclosure selects a target frequency for carrier sensing from within a bandwidth of one of a plurality of subcarriers for a channel, the bandwidth of the one of the subcarriers having at least a portion being within the transmission band. The radio station detects a signal level at the target frequency selected from within a bandwidth of the one of the subcarriers, which enables sensitivity of the carrier sensing to improve.

A more complete understanding of this application can be obtained when the following detailed description is considered in conjunction with the following drawings, in which:
FIG. 1 is a block diagram illustrating a configuration of a radio station according to Embodiment 1 of the present disclosure;
FIG. 2 is a flowchart illustrating an example operation of carrier-sense processing performed by the radio station according to Embodiment 1;
FIG. 3 is a diagram illustrating an example of a relation between a transmission band of the radio station according to Embodiment 1 and spectra of subcarriers in WLAN communication;
FIG. 4 is a diagram illustrating another example of the relation between the transmission band of the radio station according to Embodiment 1 and spectra of subcarriers in WLAN communication;
FIG. 5 is a diagram illustrating still another example of the relation between the transmission band of the radio station according to Embodiment 1 and spectra of subcarriers in WLAN communication;
FIG. 6 is a block diagram illustrating a portion of a configuration of a radio station according to Embodiment 2;
FIG. 7 is a diagram illustrating an example of a relation between a transmission band of the radio station according to Embodiment 2 and spectra of subcarriers in WLAN communication;
FIG. 8 is a block diagram illustrating a variation example of a portion of the configuration of the radio station according to Embodiment 2;
FIG. 9 is a diagram illustrating a hardware configuration of the radio station according to the embodiments of the present disclosure;
FIG. 10 is a diagram illustrating a variation example of the hardware configuration of the radio station according to the embodiments; and
FIG. 11 is a diagram illustrating an example implementation of the radio station according to the embodiments.

In wireless communication, some type of communication takes priority in a predetermined frequency band. For example, in a predetermined frequency band, a radio station that performs amateur radio communication may be required not to cause harmful interference with wireless communication performed by another wireless communication equipment that connects to a WLAN. Specifically, when a 2.4 GHz band or a 5 GHz band is used for amateur radio communication, in order to avoid interference with wireless communication performed by another wireless communication equipment, such a radio station needs to perform carrier sensing for determining whether another wireless communication equipment is performing wireless communication in a transmission band containing a transmission frequency. Since a transmission frequency of a radio station is set depending on an operation by a user, the transmission frequency may be set to a frequency shifted from a peak of a subcarrier of a radio signal transmitted in accordance with OFDM by another wireless communication equipment. In this case, when the radio station performs carrier sensing according to a signal level of a signal within the transmission band centered at the own transmission frequency, the radio station may erroneously determine that the transmission band is not used.

The present disclosure has been accomplished in view of circumstances described above, and it is an objective of the present disclosure to provide a radio station and a carrier sensing method that enable sensitivity of carrier sensing to improve.

A radio station and a carrier sensing method according to embodiments of the present disclosure are described in detail below with reference to the drawings. In each figure, same or equivalent elements are denoted by same reference signs.

### Embodiment 1

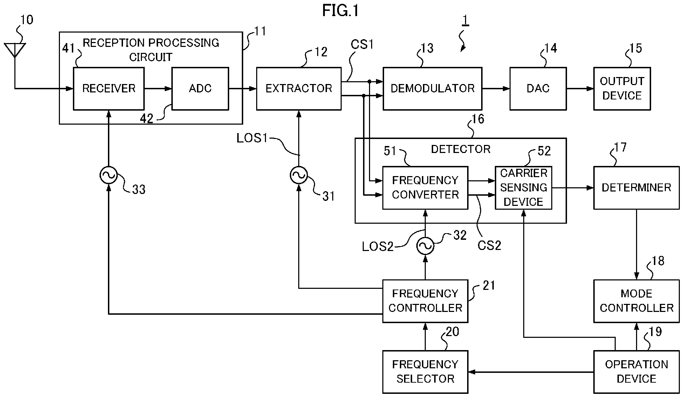

A radio station 1 illustrated in FIG. 1 is a radio station that can perform communication in a 2.4 GHz band or a 5 GHz band that is allocated for WLAN communication. In a 2.4 GHz band or a 5 GHz band, WLAN communication in accordance with OFDM is performed. When the radio station 1 is instructed to perform transmission in a 2.4 GHz band or a 5 GHz band, in order to avoid interference in the 2.4 GHz band or the 5 GHz band with WLAN communication, the radio station 1 performs carrier sensing to determine whether other wireless communication, WLAN communication to be specific, is performed in a transmission band containing a designated transmission frequency. The radio station 1 selects a target frequency for carrier sensing from within a bandwidth of at least one of OFDM subcarriers contained in the transmission band of the radio station 1 and determines whether the transmission band is used for other wireless communication from a signal level at the target frequency.

The radio station 1 includes: an antenna 10; a reception processing circuit 11; an extractor 12; a demodulator 13; a digital-to-analog converter (DAC) 14; an output device 15; a detector 16; a determiner 17; a mode controller 18; an operation device 19; a frequency selector 20; a frequency controller 21; a first oscillator 31; a second oscillator 32; and a radio frequency (RF) oscillator 33.

The antenna 10 captures a radio wave from wireless communication equipment, such as a radio station or a relay device, and outputs an electric signal derived from the captured radio wave to the reception processing circuit 11.

The reception processing circuit 11 digitally converts the electric signal acquired from the antenna 10, down-converts the resultant signal, and generates an intermediate frequency (IF) signal in an intermediate frequency band. More specifically, the reception processing circuit 11 includes a receiver 41 and an analog-to-digital converter (ADC) 42.

The receiver 41 performs signal processing on the electric signal acquired from the antenna 10, such as filtering, attenuation, amplification, or frequency conversion. For example, the receiver 41 includes a filter, a band pass filter (BPF) to be specific, an attenuator, a low noise amplifier (LNA), a mixer, and the like.

The receiver 41 multiplies the electric signal that has passed through the attenuator and the LNA after filtering at the BPF by an RF reference signal output by the RF oscillator 33 using a mixer and causes a frequency of the electric signal to be within a frequency band that can be processed by the ADC 42. For example, the receiver 41 performs signal processing described above on an electric signal of 5.6 GHz to convert the electric signal of 5.6 GHz into an electric signal of several hundred megahertz, for example, an electric signal of 300 MHz, and outputs the electric signal after conversion to the ADC 42.

The ADC 42 digitally converts the electric signal obtained after signal processing at the receiver 41 and generates an IF signal, which is a real signal. The ADC 42 outputs the IF signal to the extractor 12.

The extractor 12 performs complex frequency conversion on the IF signal using a first reference signal LOS1 output from the first variable-frequency oscillator 31 and band-limits the resultant signal within a specified bandwidth centered at a frequency of the first reference signal LOS1 to generate a first complex signal CS1, which is an in-phase/quadrature-phase (I/Q) signal. The extractor 12 outputs the first complex signal CS1 to the demodulator 13 and the detector 16.

The extractor 12 includes, for example, a phase shifter, a complex mixer, a filter, and the like. More specifically, the extractor 12 performs complex frequency conversion on the IF signal using the first reference signal LOS1 and generates a complex signal exhibiting a spectrum centered at a frequency component of the first reference signal LOS1. For example, the extractor 12 generates a complex signal exhibiting a spectrum for which the frequency of the first reference signal LOS1 is used as reference of 0 Hz. By band-limiting the complex signal within the specified bandwidth centered at 0 Hz, the first complex signal CS1 is obtained. Note that a filter for limiting a signal within a specified bandwidth centered at 0 Hz can be obtained by combining a low pass filter (LPF) for positive frequencies and a LPF for negative frequencies.

The demodulator 13 performs demodulation by means of a specified demodulation method after performing band-limiting, downsampling, and the like on the first complex signal CS1 to generate a demodulated signal, which is a real signal, and transmits the demodulated signal to the DAC 14.

The DAC 14 performs analog conversion on the demodulated signal acquired from the demodulator 13 to generate an analog signal, and transmits the analog signal to the output device 15.

The output device 15, for example, a speaker, outputs the analog signal acquired from the DAC 14.

The detector 16 detects a signal level of the real signal obtained as a result of complex frequency conversion on the first complex signal CS1 using a second reference signal LOS2 output by the second variable-frequency oscillator 32. The detector 16 outputs the detected signal level to the determiner 17.

More specifically, the detector 16 includes a frequency converter 51 and a carrier sensing device 52. The frequency converter 51 performs complex frequency conversion on the first complex signal CS1 using the second reference signal LOS2 output by the second oscillator 32, and band-limits the resultant signal within a specified bandwidth centered at a frequency of the second reference signal LOS2 to generate a second complex signal CS2. The frequency converter 51 outputs the second complex signal CS2 to the carrier sensing device 52. More specifically, by performing complex frequency conversion on the first complex signal CS1 using the second reference signal LOS2, a complex signal exhibiting a spectrum centered at a frequency component of the second reference signal LOS2 is obtained. For example, a complex signal exhibiting a spectrum for which the frequency of the second reference signal LOS2 is used as reference of 0 Hz is obtained. By band-limiting the complex signal within the specified bandwidth centered at 0 Hz, the second complex signal CS2, that is, a complex signal on which carrier sensing is performed by the carrier sensing device 52, is obtained.

The carrier sensing device 52 converts the second complex signal CS2 acquired from the frequency converter 51 into a real signal and detects a signal level of the real signal. More specifically, the carrier sensing device 52 converts the second complex signal CS2 using a reference signal supplied by a fixed-frequency oscillator (not illustrated) into a real signal. The carrier sensing device 52 obtains an effective value of the real signal by means of a root mean square (RMS) detector and converts the effective value into a value in dB by means of a logarithmic amplifier. The carrier sensing device 52 outputs the value in dB to the determiner 17 as the detected signal level.

The determiner 17 determines whether the transmission band is used for wireless communication, WLAN communication in accordance with OFDM to be specific, from the signal level acquired from the detector 16. More specifically, the determiner 17 determines whether the signal level acquired from the detector 16 is equal to or greater than a threshold value. The threshold value may be determined according to a minimum value possible for an amplitude of a real signal, for example, when WLAN communication in accordance with OFDM is performed in the transmission band. When the signal level is equal to or greater than the threshold value, the transmission band of the radio station 1 can be considered that it is used for wireless communication. When the signal level is less than the threshold value, the transmission band of the radio station 1 can be considered that it is not used for wireless communication. The determiner 17 transmits the result of determination to the mode controller 18.

The mode controller 18 performs switching between a transmitting mode and a receiving mode in accordance with the result of determination acquired from the determiner 17 and an instruction of operation acquired from the operation device 19. When the mode controller 18 performs switching to the transmitting mode, the radio station 1 can transmit a radio wave from the antenna 10 by means of a transmitter circuit (not illustrated) to other communication equipment.

The operation device 19 accepts the instruction of operation, which is specifically an instruction of an operation in one of the transmitting mode and the receiving mode. When an operation in the transmitting mode is instructed, the operation device 19 accepts designation of the transmission frequency as well as an instruction to perform transmission in one of a narrowband mode and a wideband mode in which the transmission band is wider than in the narrowband mode. Similarly, when an operation in the receiving mode is instructed, the operation device 19 accepts designation of a reception frequency as well as an instruction to perform reception in one of the narrowband mode and the wideband mode.

The wideband mode is, for example, an Amateur Television (ATV) mode that uses a transmission band of 17 MHz. When an operation in the transmitted mode is instructed and the operation device 19 accepts designation of the transmission frequency as well as an instruction to perform transmission in one of the narrowband mode and the wideband mode, the operation device 19 transmits an instruction of operation in the transmitting mode to the mode controller 18 and outputs a value of the transmission frequency as well as an instruction of operation in the transmitting mode to perform transmission in the designated one of the narrowband mode and the wideband mode to the frequency selector 20.

When the frequency selector 20 acquires the value of the transmission frequency from the operation device 19, the frequency selector 20 selects the target frequency for carrier sensing based on the transmission frequency. The frequency selector 20 outputs the value of the transmission frequency and a value of the selected target frequency to the frequency controller 21.

The frequency controller 21 controls the first oscillator 31 according to the transmission frequency, and adjusts the frequency of the first reference signal LOS1 output by the first oscillator 31. The frequency controller 21 controls the second oscillator 32 according to difference between the transmission frequency and the target frequency, and adjusts the frequency of the second reference signal LOS2 output by the second oscillator 32. The frequency controller 21 controls the RF oscillator 33 according to the transmission frequency, and adjusts the frequency of the RF reference signal output by the RF oscillator 33.

The first oscillator 31, the second oscillator 32, and the RF oscillator 33 are local oscillators the frequency of which can be changed by a control by the frequency controller 21.

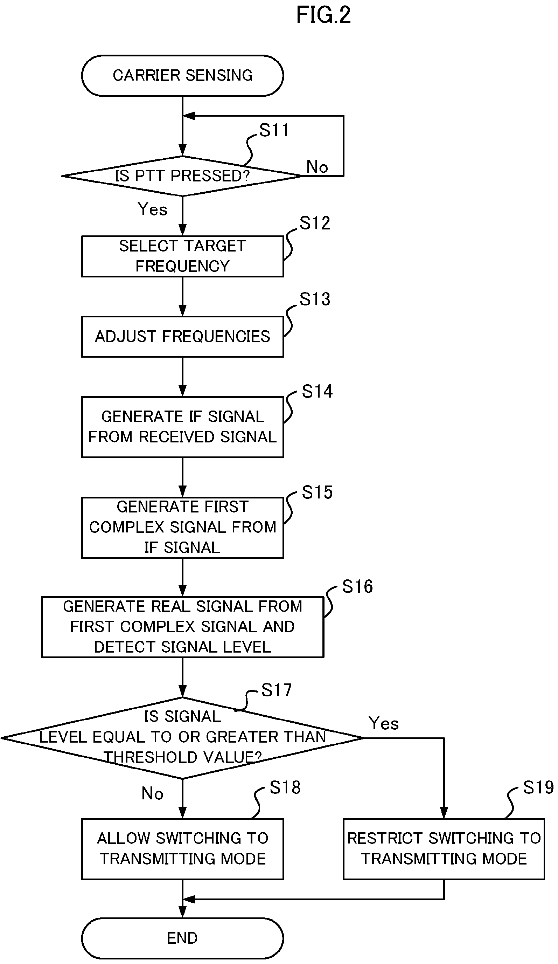

In order to avoid interference with WLAN communication, when the operation device 19 accepts an instruction to perform transmission in the transmitting mode, the radio station 1 having the configuration described above starts carrier-sense processing. As illustrated in FIG. 2, the operation device 19 repeats processing in Step S11 while Push to Talk (PTT) is not pressed (Step S11: No). When PTT provided in the operation device 19 is pressed (Step S11: Yes), the operation device 19 transmits the value of the transmission frequency to the frequency selector 20, and the frequency selector 20 selects the target frequency for carrier sensing based on the transmission frequency (Step S12). The frequency selector 20 transmits the value of the transmission frequency and a value of the selected target frequency to the frequency controller 21.

For WLAN communication, a plurality of channels each having a specified bandwidth are defined in standards. Each channel contains a plurality of subcarriers. For example, in IEEE802.11a/g/n/ac standards, 63 subcarriers each having a 312.5 kHz bandwidth are contained in a single channel having a 20 MHz bandwidth.

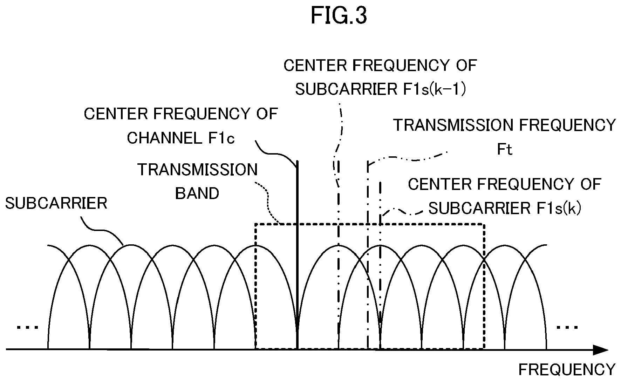

FIG. 3 illustrates an example of spectra of a plurality of subcarriers contained in a single channel. In FIG. 3, an area enclosed by a dotted line indicates a transmission band containing a transmission frequency Ft. In the example illustrated in FIG. 3, the channel is configured not to contain a subcarrier the center frequency of which is equal to a center frequency F1c of the channel.

The frequency selector 20 selects, when at least a portion of the transmission band containing the designated transmission frequency, that is, the transmission frequency the value of which is acquired from the operation device 19, overlaps with at least a portion of a bandwidth of at least one of a plurality of channels specified for WLAN communication, a target frequency for carrier sensing from within a bandwidth of one of a plurality of subcarriers for the at least one of the channels, at least a portion of the bandwidth of the one of the subcarriers being within the transmission band.

The frequency selector 20 selects, when a center frequency of one of the subcarriers is within the transmission band, at least a portion of a bandwidth of the one of the subcarriers being within the transmission band, the target frequency based on the center frequency. In the example illustrated in FIG. 3, the center frequencies of the subcarriers are within the transmission band, which is the area enclosed by the dotted line. The frequency selector 20 preferably selects a center frequency of a subcarrier closest to the transmission frequency Ft to be the target frequency.

In the example illustrated in FIG. 3, the transmission frequency Ft is located between two adjacent subcarriers. A center frequency of one of the subcarriers adjacent to each other across the transmission frequency Ft is assumed to be F1s(k-1) while a center frequency of the other subcarrier is assumed to be F1s(k). In the example illustrated in FIG. 3, the center frequency F1s(k) is closer to the transmission frequency Ft than the center frequency F1s(k-1). Therefore, the frequency selector 20 selects the center frequency F1s(k) to be the target frequency for carrier sensing.

As illustrated in FIG. 2, the frequency controller 21 adjusts the frequencies of the first reference signal LOS1, the second reference signal LOS2, and the RF reference signal according to the transmission frequency and the target frequency obtained in Step S12 (Step S13).

The frequency controller 21 controls the first oscillator 31 according to the transmission frequency to adjust the frequency of the first reference signal LOS1. Specifically, the frequency controller 21 adjusts the frequency of the first reference signal LOS1 to a frequency of the IF signal generated when an electric signal the frequency of which is equal to that of the transmission frequency is input to the reception processing circuit 11.

The frequency controller 21 controls the second oscillator 32 according to the difference between the transmission frequency and the target frequency to adjust the frequency of the second reference signal LOS2. Specifically, the frequency controller 21 adjusts the frequency of the second reference signal LOS2 to the difference between the transmission frequency and the target frequency.

The frequency controller 21 controls the RF oscillator 33 according to the transmission frequency to adjust the frequency of the RF reference signal. Specifically, the frequency controller 21 adjusts the frequency of the RF reference signal in such a way that the frequency of the electric signal output by the receiver 41 is within a frequency range that can be processed by the ADC 42.

As illustrated in FIG. 2, the reception processing circuit 11 digitally converts the electric signal acquired from the antenna 10, down-converts the resultant signal, and generates an IF signal (Step S14). The reception processing circuit 11 outputs the IF signal to the extractor 12.

The extractor 12 performs complex frequency conversion on the IF signal using the first reference signal LOS1 output from the first oscillator 31, and band-limits the resultant signal to generate the first complex signal CS1 (Step S15). Since the frequency of the first reference signal LOS1 is adjusted according to the transmission frequency in Step S13, the first complex signal CS1 generated in Step S15 exhibits a spectrum centered at a component of the transmission frequency.

The detector 16 generates a real signal from the first complex signal CS 1 and detects a signal level (Step S16). More specifically, the detector 16 performs complex frequency conversion on the first complex signal CS 1 using the second reference signal LOS2 output by the second oscillator 32, and band-limits the resultant signal to generate the second complex signal CS2. The detector 16 generates a real signal from the second complex signal CS2 and detects a signal level of the real signal. Since the frequency of the second reference signal LOS2 is adjusted according to the difference between the transmission frequency and the target frequency in Step S13, the second complex signal CS2 generated in Step S16 exhibits a spectrum centered at a frequency component of the target frequency. The detector 16 generates a real signal from the second complex signal CS2 exhibiting a spectrum centered at the frequency component of the target frequency and detects a signal level of the real signal.

The determiner 17 determines whether the signal level is equal to or greater than a threshold value (Step S17). When the signal level is less than the threshold value (Step S17: No), it can be considered that no wireless communication is performed in the transmission band, and the mode controller 18 allows switching to the transmitting mode (Step S 18). As a result, the radio station 1 can perform transmission in the transmission band containing the transmission frequency designated at the operation device 19.

When the signal level is equal to or greater than the threshold value (Step S17: Yes), it can be considered that wireless communication is performed in the transmission band, and the mode controller 18 does not allow switching to the transmitting mode (Step S 19). As a result, the radio station 1 is prevented from performing transmission in the transmission band containing the transmission frequency designated at the operation device 19.

As described above, the radio station 1 according to Embodiment 1 performs carrier sensing at the target frequency selected from within a bandwidth of a subcarrier, which enables sensitivity of the carrier sensing to improve. Specifically, performing carrier sensing at a center frequency of a subcarrier enables sensitivity of the carrier sensing to improve.

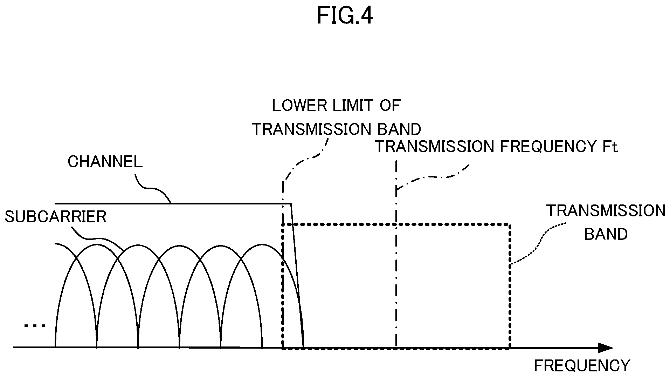

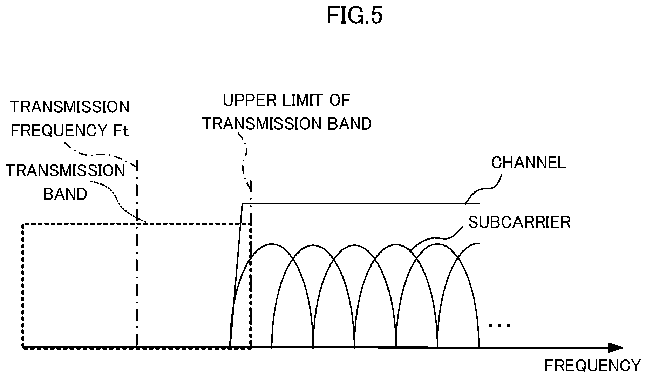

In addition to those described above, various variations of the radio station 1 according to Embodiment 1 may be made. First, a method of selecting the target frequency is not limited to the example described above. As an example, as illustrated in FIG. 4 and FIG. 5, the frequency selector 20 may select, when each center frequency of subcarriers is outside the transmission band, an upper limit or a lower limit of the transmission band overlapping with one of the subcarriers as the target frequency.

In the example illustrated in FIG. 4, the subcarrier to which the highest frequency in a channel is allocated and the lower limit of the transmission band overlap. In this case, the frequency selector 20 selects the lower limit of the transmission band to be the target frequency.

In the example illustrated in FIG. 5, the subcarrier to which the lowest frequency in a channel is allocated and the upper limit of the transmission band overlap. In this case, the frequency selector 20 selects the upper limit of the transmission band to be the target frequency.

Second, the radio station 1 may select, as described above, the target frequency from within a bandwidth of a subcarrier contained in the transmission band when performing transmission in the wideband mode, and may select only the transmission frequency to be the target frequency when performing transmission in the narrowband mode. Specifically, when the frequency selector 20 acquires an instruction of operation in the transmitting mode to perform transmission in the wideband mode from the operation device 19, the frequency selector 20 selects, as described above, the target frequency from within a bandwidth of a subcarrier contained in the transmission band. When the frequency selector 20 acquires an instruction of operation in the transmitting mode to perform transmission in the narrowband mode from the operation device 19, the frequency selector 20 selects the transmission frequency as the target frequency. When performing transmission in the narrowband mode in which the transmission band is narrow, performing carrier sensing only at the transmission frequency prevents limitation in performing transmission by the radio station 1 due to presence of communication outside the transmission band.

Third, when a frequency of an electric signal is within a frequency band that can be processed by the ADC 42, the receiver 41 does not have to perform frequency conversion. In this case, the radio station 1 does not have to include the RF oscillator 33.

Fourth, a circuit provided between the antenna 10 and the detector 16 may be any circuit as long as the circuit enables the detector 16 to perform carrier sensing at the target frequency.

### Embodiment 2

The target frequency at which the radio station 1 performs carrier sensing is not limited to one. The radio station 1 that performs carrier sensing at a plurality of target frequencies at the same timing is described in Embodiment 2 with a focus on the difference from the radio station 1 according to Embodiment 1.

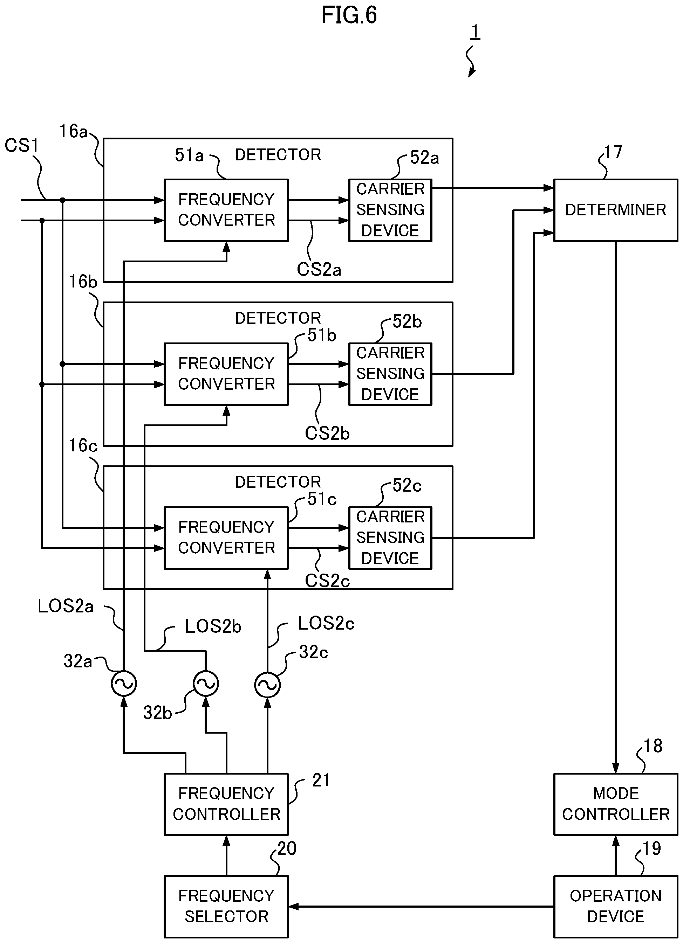

As illustrated in FIG. 6 illustrating a portion of the configuration of the radio station 1, the radio station 1 according to Embodiment 2 includes a plurality of detectors and a plurality of second oscillators. More specifically, the radio station 1 includes detectors 16a, 16b, 16c, and second variable-frequency oscillators 32a, 32b, 32c that respectively output second reference signals LOS2a, LOS2b, LOS2c each having a different frequency to the detectors 16a, 16b, 16c. The detectors 16a, 16b, 16c are individually associated with a different one of the second oscillators 32a, 32b, 32c. Specifically, the detectors 16a, 16b, 16c are respectively associated with the second oscillators 32a, 32b, 32c.

The configurations of the detectors 16a, 16b, 16c are similar to that of the detector 16 included in the radio station 1 according to Embodiment 1. More specifically, the detector 16a includes a frequency converter 51a and a carrier sensing device 52a. The detector 16b includes a frequency converter 51b and a carrier sensing device 52b. The detector 16c includes a frequency converter 51c and a carrier sensing device 52c.

The configurations of the frequency converters 51a, 51b, 51c are similar to that of the frequency converter 51 included in the detector 16 included in the radio station 1 according to Embodiment 1. The frequency converters 51a, 51b, 51c individually perform complex frequency conversion on the first complex signal CS1 respectively using the second reference signals LOS2a, LOS2b, LOS2c output by the second variable-frequency oscillators 32a, 32b, 32c, and band-limit the resultant signals to generate second complex signals CS2a, CS2b, CS2c, respectively. The configurations of the carrier sensing devices 52a, 52b, 52c are similar to that of the carrier sensing device 52 included in the detector 16 included in the radio station 1 according to Embodiment 1. The carrier sensing devices 52a, 52b, 52c respectively convert the second complex signals CS2a, CS2b, CS2c into a real signal and detect a signal level of the real signal.

The configurations of the second oscillators 32a, 32b, 32c are similar to that of the second oscillator 32 included in the radio station 1 according to Embodiment 1. With the second oscillators 32a, 32b, 32c controlled by the frequency controller 21, frequencies of the second reference signals LOS2a, LOS2b, LOS2c are adjusted.

The radio station 1 having the configuration described above according to Embodiment 2 performs carrier sensing at the target frequency that may be a plurality of frequencies at the same timing. The operation device 19 outputs a value of the transmission frequency as well as an instruction of operation in the transmitting mode to perform transmission in the designated one of the narrowband mode and the wideband mode to the frequency selector 20.

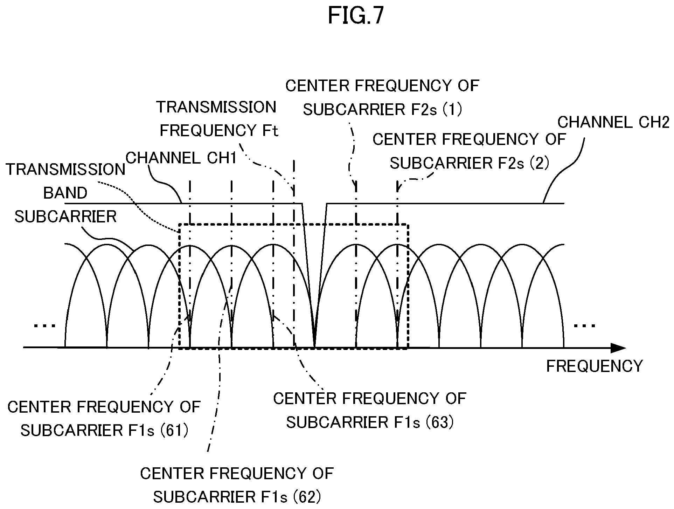

As illustrated in FIG. 7, the transmission band may overlap with a plurality of channels. In Embodiment 2, the transmission band overlaps with a portion of bandwidth of channel CH1 and a portion of bandwidth of channel CH2. The frequency selector 20 selects a target frequency from within a bandwidth of one of a plurality of subcarriers for each of the channels CH1 and CH2, at least a portion of the bandwidth of the one of the subcarriers being within the transmission band. For example, the frequency selector 20 selects a center frequency F1s (63) of a subcarrier of the subcarriers for the channel CH1 within the transmission band, the center frequency being closest to the transmission frequency Ft among center frequencies of the subcarriers, as the target frequency. The frequency selector 20 selects a center frequency F2s (1) of a subcarrier of the subcarriers for the channel CH2 within the transmission band, the subcarrier being closest to the transmission frequency Ft, as the target frequency.

In Embodiment 2, the frequency selector 20 selects the transmission frequency Ft in addition to the aforementioned center frequencies F1s (63) and F2s (1) to be the target frequency.

The detectors 16a, 16b, 16c illustrated in FIG. 6 respectively perform carrier sensing at the transmission frequency Ft and the center frequencies F1s (63) and F2s (1). The frequency controller 21 controls the second oscillators 32a, 32b, 32c according to the difference between the transmission frequency Ft and the transmission frequency Ft, the difference between the transmission frequency Ft and the center frequency F1s (63), and the difference between the transmission frequency Ft and the center frequency F2s (1), respectively.

Since the target for carrier sensing by the detector 16a is the transmission frequency Ft, it can be considered that the difference between the transmission frequency and the target frequency is zero. In other words, the frequency of the second reference signal LOS2a output by the second oscillator 32a can be considered to be 0 Hz. The frequency of the second reference signal LOS2b output by the second oscillator 32b is derived from the difference between the transmission frequency Ft and the center frequency F1s (63). The frequency of the second reference signal LOS2c output by the second oscillator 32c is derived from the difference between the transmission frequency Ft and the center frequency F2s (1).

In the detector 16a that performs carrier sensing at the transmission frequency Ft, the frequency converter 51a preferably generates the second complex signal CS2a by performing complex frequency conversion on the first complex signal CS1 using the second reference signal LOS2a and band-limiting the resultant signal within the transmission band in the narrowband mode.

The determiner 17 determines whether the transmission band is used for wireless communication from the signal level detected by each of the detectors 16a, 16b, 16c. More specifically, the determiner 17 determines whether each of the signal levels acquired from the detectors 16a, 16b, 16c is equal to or greater than a threshold value. When at least one of the signal levels is equal to or greater than the threshold value, the transmission band of the radio station 1 can be considered that it is used for wireless communication. The determiner 17 transmits the result of determination to the mode controller 18.

As described above, the radio station 1 according to Embodiment 2 performs, when the transmission band overlaps with a plurality of channels, carrier sensing for the channels at the same timing, which prevents increase of processing time for the carrier sensing while enabling sensitivity of the carrier sensing to improve.

In the radio station 1 according to Embodiment 2, the configurations of the detectors 16a, 16b, 16c are the same, which prevents complicating the configuration of the radio station 1 and complicating a manufacturing process.

In addition to those described above, various variations of the radio station 1 according to Embodiment 2 may be made. First, a method of selecting the target frequency is not limited to the example described above. As an example, in the example illustrated in FIG. 7, the frequency selector 20 may select a center frequency F1s (61) of a subcarrier of the subcarriers for the channel CH1 within the transmission band, the center frequency being closest to the center of the bandwidth of the channel CH1 among center frequencies of the subcarriers, to be the target frequency. In addition, the frequency selector 20 may select a center frequency F2s (2) of a subcarrier of the subcarriers for the channel CH2 within the transmission band, the subcarrier being closest to the center of the bandwidth of the channel CH2, as the target frequency.

In another example, the frequency selector 20 does not have to include the transmission frequency Ft in the target frequencies. In this case, the radio station 1 does not have to include the detector 16a and just has to include the detectors 16b and 16c.

In still another example, the frequency selector 20 may select both the upper limit and the lower limit of the transmission band as the target frequencies. In the example illustrated in FIG. 7, the lower limit of the transmission band is used for carrier sensing to determine presence or absence of WLAN communication in the channel CH1 while the upper limit of the transmission band is used for carrier sensing to determine presence or absence of WLAN communication in the channel CH2.

Second, any number of the detectors may be provided and the number of the detectors may be determined for a channel of WLAN communication in which interference needs to be avoided. For example, in WLAN communication in a 2.4 GHz band, there is a frequency band in which three or more channels overlap. In this case, the radio station 1 may include four or more detectors.

Third, the determiner 17 may determine, using a threshold value determined for each of the detectors 16a to 16c, whether the signal level detected by each of the detectors 16a to 16c is equal to or greater than the threshold value for each of the detectors 16a to 16c. Using a threshold value for a frequency band enables sensitivity of carrier sensing to improve.

The variation examples described in Embodiment 1 are applicable to Embodiment 2. Specifically, the radio station 1 according to Embodiment 2 may select, as described above, the target frequency from within a bandwidth of a subcarrier contained in the transmission band when performing transmission in the wideband mode, and may select only the transmission frequency as the target frequency when performing transmission in the narrowband mode.

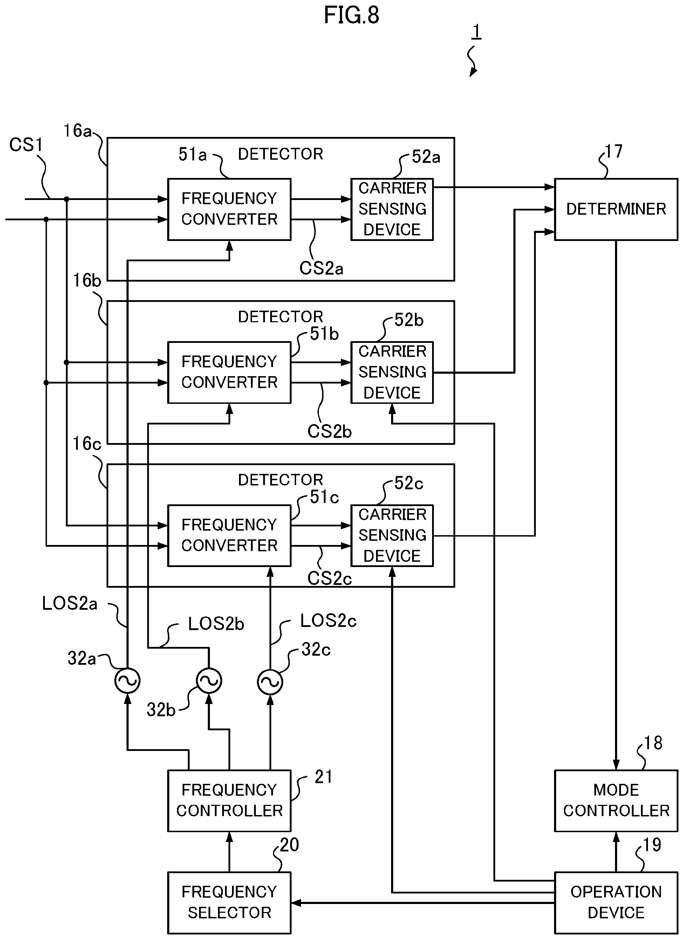

More specifically, as illustrated in FIG. 8, the operation device 19 outputs a value of the transmission frequency as well as an instruction of operation in the transmitting mode to perform transmission in the designated one of the narrowband mode and the wideband mode to the frequency selector 20 and the carrier sensing devices 52b and 52c included in the detectors 16b and 16c. When the carrier sensing devices 52b and 52c acquire the instruction of operation in the transmitting mode to perform transmission in the wideband mode from the operation device 19, the carrier sensing devices 52b and 52c detect a signal level of a real signal. When the carrier sensing devices 52b and 52c acquire the instruction of operation in the transmitting mode to perform transmission in the narrowband mode from the operation device 19, the carrier sensing devices 52b and 52c do not detect a signal level of a real signal. In this manner, the radio station 1 can perform carrier sensing at the transmission frequency and the frequency selected as described above from within a bandwidth of a subcarrier contained in the transmission band when performing transmission in the wideband mode, and perform carrier sensing only at the transmission frequency when performing transmission in the narrowband mode.

In addition, when a frequency of an electric signal is within a frequency band that can be processed by the ADC 42, the receiver 41 does not have to perform frequency conversion. In this case, the radio station 1 according to Embodiment 2 does not have to include the RF oscillator 33.

Further, a circuit provided between the antenna 10 and the detector 16 may be any circuit as long as the circuit enables the detector 16 to perform carrier sensing at the target frequency.

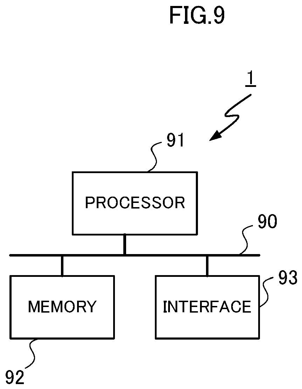

As illustrated in FIG. 9, each of the radio stations 1 described above includes a processor 91, a memory 92, and an interface 93 as hardware components for controlling individual components. The processor 91, the memory 92, and the interface 93 are interconnected via a bus 90. The processor 91 includes transistors and other electronic circuits therein and is considered circuitry or processing circuitry.

For example, functions of the radio station 1 are implemented by executing, by the processor 91 that is a programmed processor, a program stored in the memory 92.

For example, the interface 93 is for connecting other communication equipment, an external device, or the like to establish communication. The interface 93 includes a plurality of types of interface modules as appropriate.

In the example illustrated in FIG. 9, although the radio station 1 includes a single processor 91 and a single memory 92, the radio station 1 may include a plurality of processors 91 and a plurality of memories 92. In this case, functions of the radio station 1 may be implemented by cooperation between the processors 91 and the memories 92.

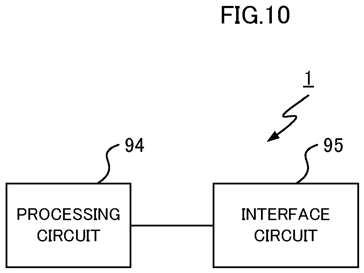

As illustrated in FIG. 10, the radio station 1 may be implemented by a processing circuit 94. The processing circuit 94 is connected to other communication equipment, an external device, or the like via an interface circuit 95.

When the processing circuit 94 is dedicated hardware, the processing circuit 94 includes a single circuit, a composite circuit, a processor, an Application Specific Integrated Circuit (ASIC), a Field Programmable Gate Array (FPGA), or a combination thereof. Individual components of the radio station 1 may be implemented by separate processing circuits 94; alternatively, individual components of the radio station 1 may be implemented by a common processing circuit 94.

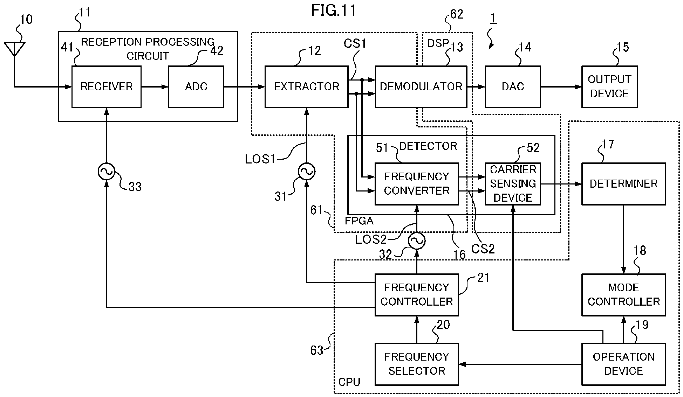

Some functions of the radio station 1 may be implemented by dedicated hardware and functions other than those may be implemented by software or firmware. For example, as illustrated in FIG. 11, in the radio station 1, the extractor 12, some functions of the demodulator 13, and the frequency converter 51 may be implemented by an FPGA 61; functions other than those of the demodulator 13 and the carrier sensing device 52 may be implemented by a Digital Signal Processor (DSP) 62; and the determiner 17, the mode controller 18, the operation device 19, the frequency selector 20, and the frequency controller 21 may be implemented by a Central Processing Unit (CPU) 63. Some functions of the demodulator 13 implemented by the FPGA61 cause, for example, a band on which demodulation processing is executed to be band-limited by a Cascaded Integrator-Comb (CIC) filter and a Finite Impulse Response (FIR) filter and cause the first complex signal CS1 that has been band-limited to be downsampled. The functions other than those of the demodulator 13 implemented by the DSP 62 cause demodulation processing to be executed on the first complex signal CS1 that has been band-limited and downsampled.

Besides, the hardware configurations and the flowcharts described above are merely examples and any changes and modifications may be made.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. A radio station (1), comprising:
a frequency selector (20) to select, when at least a portion of a transmission band containing a designated transmission frequency overlaps with at least a portion of a bandwidth of at least one of a plurality of channels specified for wireless communication in accordance with Orthogonal Frequency Division Multiplexing, a target frequency for carrier sensing from within a bandwidth of one of a plurality of subcarriers for the at least one of the channels, the bandwidth of the one of the subcarriers having at least a portion being within the transmission band;
a detector (16, 16a, 16b, 16c) to detect a signal level, at the target frequency, of a real signal obtained as a result of digitally converting an electric signal derived from a radio wave captured by an antenna (10); and
a determiner (17) to determine whether the transmission band is used for the wireless communication from the signal level detected by the detector (16, 16a, 16b, 16c).

2. The radio station (1) according to claim 1, wherein
the frequency selector (20) selects, when a center frequency of one of the subcarriers of which a bandwidth has at least a portion being within the transmission band is within the transmission band, the target frequency based on the center frequency.

3. The radio station (1) according to claim 2, wherein
the frequency selector (20) selects, when center frequencies of the subcarriers are within the transmission band, one of the center frequencies that is closest to the transmission frequency as the target frequency.

4. The radio station (1) according to claim 2, wherein
the frequency selector (20) selects, when center frequencies of the subcarriers are within the transmission band, one of the center frequencies that is closest to a center of a bandwidth of one of the channels containing the subcarriers as the target frequency.

5. The radio station (1) according to claim 1, wherein
the frequency selector (20) selects, when a center frequency of each of the at least one of the subcarriers of which a bandwidth has at least a portion being within the transmission band, is outside the transmission band, an upper limit or a lower limit of the transmission band overlapping with the at least one of the subcarriers as the target frequency.

6. The radio station (1) according to any one of claims 1 to 5, wherein
the frequency selector (20) selects, when at least a portion of the transmission band overlaps with at least a portion of a bandwidth of each of the channels that is within the transmission band, the target frequency for each of the channels from within a bandwidth of one of the subcarriers for the channels that is within the transmission band.

7. The radio station (1) according to any one of claims 1 to 5, further comprising:
a reception processing circuit (11) to digitally convert the electric signal, down-convert the resultant signal, and generate an IF signal in an intermediate frequency band;
a first variable-frequency oscillator (31) to output a first reference signal (LOS1);
a second variable-frequency oscillator (32) to output a second reference signal (LOS2);
an extractor (12) to perform complex frequency conversion on the IF signal using the first reference signal (LOS1) and band-limit the resultant signal within a specified bandwidth centered at a frequency of the first reference signal (LOS1) to generate a first complex signal (CS1); and
a frequency controller (21) to adjust the frequency of the first reference signal (LOS1) according to the transmission frequency and adjust a frequency of the second reference signal (LOS2) according to difference between the transmission frequency and the target frequency, wherein
the detector (16) detects the signal level of the real signal obtained as a result of complex frequency conversion on the first complex signal (CS1) using the second reference signal (LOS2).

8. The radio station (1) according to claim 6, further comprising:
a reception processing circuit (11) to digitally convert the electric signal, down-convert the resultant signal, and generate an IF signal in an intermediate frequency band;
a first variable-frequency oscillator (31) to output a first reference signal (LOS1);
a plurality of second variable-frequency oscillators (32a, 32b, 32c) to respectively output second reference signals (LOS2a, LOS2b, LOS2c) each having a different frequency;
an extractor (12) to perform complex frequency conversion on the IF signal using the first reference signal (LOS1) and band-limit the resultant signal within a specified bandwidth centered at a frequency of the first reference signal (LOS1) to generate a first complex signal (CS1); and
a frequency controller (21) to adjust the frequency of the first reference signal (LOS1) according to the transmission frequency and adjust frequencies of the second reference signals (LOS2a, LOS2b, LOS2c) according to difference between the transmission frequency and the target frequency, wherein
the radio station (1) comprises a plurality of the detectors (16a, 16b, 16c) each associated with a corresponding one of the second variable-frequency oscillators (32a, 32b, 32c),
the detectors (16a, 16b, 16c) each detect the signal level of the real signal obtained as a result of complex frequency conversion on the first complex signal (CS1) using the second reference signal (LOS2a, LOS2b, LOS2c) output from the second variable-frequency oscillator (32a, 32b, 32c) associated with the detector (16a, 16b, 16c),
the frequency controller (21) adjusts the frequency of the second reference signal (LOS2a, LOS2b, LOS2c) output from each of the second variable-frequency oscillators (32a, 32b, 32c) according to the difference between the transmission frequency and the target frequency selected by the frequency selector (20) for each of the channels, and
the determiner (17) determines whether the transmission band is used for the wireless communication from the signal level detected by each of the detectors (16a, 16b, 16c).

9. The radio station (1) according to any one of claims 1 to 8, wherein
the frequency selector (20) selects the transmission frequency and a frequency within a bandwidth of one of the subcarriers for the channels having at least a portion being within the transmission band, as the target frequencies.

10. The radio station (1) according to any one of claims 1 to 9, further comprising:
an operation device (19) to accept designation of the transmission frequency as well as an instruction to perform transmission in one of a narrowband mode and a wideband mode in which the transmission band is wider than in the narrowband mode, wherein
when transmission in the wideband mode is designated at the operation device (19), the frequency selector (20) selects, when at least a portion of the transmission band containing the transmission frequency designated at the operation device (19) overlaps with at least a portion of the bandwidth of the at least one of the channels, the target frequency from within a bandwidth of one of the subcarriers for the at least one of the channels having at least a portion being within the transmission band, and when transmission in the narrowband mode is designated at the operation device (19), the frequency selector (20) selects, the transmission frequency designated at the operation device (19) as the target frequency.

11. The radio station (1) according to any one of claims 1 to 10, wherein
the frequency selector (20) selects, when at least a portion of the transmission band overlaps with at least a portion of a bandwidth of at least one of a plurality of channels specified for WLAN communication in accordance with Orthogonal Frequency Division Multiplexing, a target frequency for carrier sensing from within a bandwidth of one of the subcarriers for the at least one of the channels having at least a portion being within the transmission band.

12. A carrier sensing method performed by a radio station (1), the method comprising:
selecting, when at least a portion of a transmission band containing a designated transmission frequency overlaps with at least a portion of a bandwidth of at least one of a plurality of channels specified for wireless communication in accordance with Orthogonal Frequency Division Multiplexing, a target frequency for carrier sensing from within a bandwidth of one of a plurality of subcarriers for the at least one of the channels, the bandwidth of the one of the subcarriers having at least a portion being within the transmission band;
detecting a signal level, at the target frequency, of a real signal obtained as a result of digitally converting an electric signal derived from a radio wave captured by an antenna (10); and
determining whether the transmission band is used for the wireless communication from the signal level.
